# EUROPÄISCHE PATENTANMELDUNG

(11) **EP 1 378 747 A2**
(43) Veröffentlichungstag der Anmeldung: **07.01.2004**
(21) Anmeldenummer: 03010883.1
(22) Anmeldetag: 15.05.2003
(51) Int. Cl.: G01N 33/00

(54) **Optischer Sensor**

(30) Priorität: 03.07.2002 DE 10229756
(71) Anmelder: ROBERT BOSCH GMBH, 70442 Stuttgart (DE)
(72) Erfinder: Brinz, Thomas, 73266 Bissingen Unter Der Tech (DE); Lewis, Mary, 70839 Gerlingen (DE)

(57) **Zusammenfassung**

Es wird ein optischer Gassensor zur Bestimmung eines Gases, insbesondere in Luft, beschrieben, der eine Strahlungsquelle (12), einen Detektor (24) und eine sich im Strahlengang (13) der Strahlungsquelle (12) befindende sensitive Schicht (14) aufweist. Die sensitive Schicht (14) enthält mindestens ein Oligomer oder Polymer mit mindestens einer Seitenkette, wobei die Seitenkette mindestens eine basisch oder sauer wirkende funktionelle Gruppe aufweist.

## Beschreibung

### Stand der Technik

Die Erfindung bezieht sich auf einen optischen Sensor nach der Gattung des Anspruchs 1 und auf dessen Verwendung.

Optische Sensoren zur Bestimmung der Konzentration eines Gases, beispielsweise des Kohlendioxidgehaltes der Luft, werden unter anderem in Brandmeldern eingesetzt. Ihre Funktion beruht darauf, dass eine auf Kohlendioxid sensitive Schicht des Sensors bei Kontakt mit dem zu bestimmenden Gas ihre Farbe reversibel ändert. Diese Farbänderung wird durch einen Detektor erfasst und bei Überschreitung einer festgelegten Mindestkonzentration wird ein Alarm ausgelöst.

Derartige Sensoren unterliegen der Anforderung, dass sie auch sehr geringe Gaskonzentrationen noch hinreichend genau detektieren können. Je größer das Absorptionsvermögen der sensitiven Schicht eines Sensors für das zu bestimmende Gas ist, desto rascher erfolgt eine Signaländerung des Sensors. Aus der höheren Konzentration des zu bestimmenden Gases in der sensitiven Schicht resultiert weiterhin eine größere Lichtabsorption in der sensitiven Schicht, wodurch genauere Messergebnisse des Sensors ermöglicht werden.

In der WO 00/02844 wird vorgeschlagen, in die sensitive Schicht eines Kohlendioxidsensors ein oligomeres quarternäres Alkylammioniumkation vorzusehen, wobei die quaternären Ammoniumfunktionen Bestandteil der Hauptkette des Polymers sind. Das quarternäre Ammoniumkation liegt als Hydroxid vor und wirkt als Base. Dies ermöglicht eine verstärkte Aufnahme von Kohlendioxid in die sensitive Schicht. Probleme sind allerdings in der Langzeitbeständigkeit der sensitiven Schicht zu erwarten, da das oligomere Alkylammoniumkation aufgrund seiner Polarität zu einer Entmischung der Polymermatrix führen kann.

Aufgabe der vorliegenden Erfindung ist es, einen optischen Sensor zur Bestimmung eines Gases bereitzustellen, der zeitnah genaue Messergebnisse ermöglicht und dessen sensitive Schicht stabil und möglichst gasdurchlässig ist.

### Vorteile der Erfindung

Der erfindungsgemäße optische Sensor mit den kennzeichnenden Merkmalen des Anspruchs 1 hat den Vorteil, dass er die Messung kleinster Gaskonzentrationen mit hoher Genauigkeit ermöglicht. Dies wird erreicht, indem die sensitive Schicht des Sensors ein Oligomer oder Polymer enthält, das Seitenketten aufweist, wobei in mindestens einer der Seitenketten eine basisch oder sauer wirkende funktionelle Gruppe vorgesehen ist. Der besondere Vorteil dieser Art von Oligomeren bzw. Polymeren ist, dass die Zahl der pH-aktiven Zentren im Molekül je nach Bedarf variiert werden kann, wodurch die Basizität bzw. Acidität der sensitiven Schicht einstellbar ist. Gleichzeitig ist die Art der Hauptkette des oligomers bzw. Polymers relativ frei wählbar, sodass durch geeignete Wahl der Hauptkette einer Entmischung der sensitiven Schicht wirksam vorgebeugt wird. Die freie Wählbarkeit der Hauptkette des Oligomers bzw. Polymers ermöglicht es weiterhin, die Polymermatrix der sensitiven Schicht durch Auswahl geeigneter Oligomere bzw. Polymere porös und gasdurchlässig zu gestalten. Ein poröser Aufbau der sensitiven Schicht ermöglicht eine höhere Schichtdicke der sensitiven Schicht und somit auf der Basis der dadurch bedingten höheren Lichtabsorption die Detektion des zu bestimmenden Gases bereits im Spurenbereich. Allgemein wird ein genaueres Messsignal zu erhalten.

Mit den in den Unteransprüchen aufgeführten Maßnahmen sind vorteilhafte Weiterbildungen des erfindungsgemäßen optischen Sensors möglich.

So ist insbesondere die Verwendung von Oligomeren bzw. Polymeren von Vorteil, in deren Seitenketten mehr als nur eine pH-aktive funktionelle Gruppe vorhanden sind. Dies verstärkt die Basizität bzw. Acidität des betreffenden Oligomers bzw. Polymers. Besonders vorteilhaft ist die Verwendung von quarternären Ammonium- oder Phosphoniumhydroxyden als basische funktionelle Gruppen bzw. von Sulfon-, Phosphon- oder Carbonsäuren als acide funktionelle Gruppen, da diese präparativ einfach zugänglich sind.

Weiterhin ist vorteilhaft, wenn die Polymermatrix der sensitiven Schicht als Basismaterial Polydimethylsiloxan enthält, da dieses sehr gute Diffusionseigenschaften vor allem für Kohlendioxid zeigt.

### Zeichnung

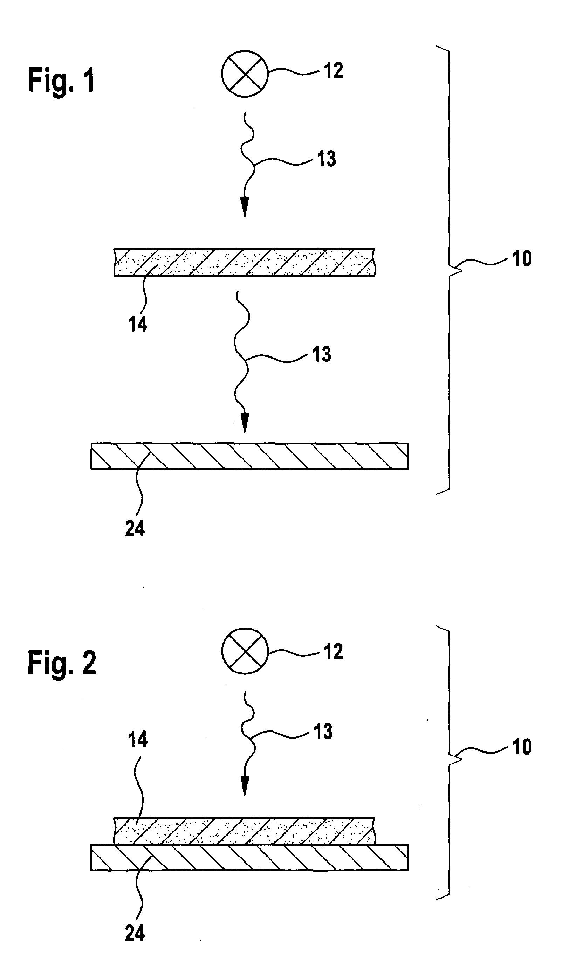

Zwei Ausführungsbeispiele der Erfindung sind in der Zeichnung dargestellt und in der nachfolgenden Beschreibung näher erläutert. Figur 1 zeigt schematisch einen Sensoraufbau gemäß einem ersten Ausführungsbeispiel des erfindungsgemäßen optischen Sensors und Figur 2 einen Sensoraufbau gemäß einem zweiten Ausführungsbeispiel.

### Ausführungsbeispiele

Der in Figur 1 dargestellte optische Sensor 10 beinhaltet eine Strahlungsquelle 12, beispielsweise eine Leuchtdiode, und einen Detektor 24, der beispielsweise als Fotodiode ausgestaltet ist. Zwischen Strahlungsquelle 12 und Detektor 24 ist eine sensitive Schicht 14 angeordnet, die beispielsweise auf einem nicht dargestellten lichtdurchlässigen Substrat aus Glas aufgebracht ist. Als Material für das lichtdurchlässige Substrat können auch andere optisch transparente Substanzen wie beispielsweise Polymethacrylate verwendet werden.

Die sensitive Schicht 14 verändert beim Überschreiten einer Mindestkonzentration des zu bestimmenden Gases reversibel ihre Farbe. Die sensitive Schicht 14 weist eine Polymermatrix auf, in der sich die für die Sensitivität des Sensors verantwortlichen Verbindungen, wie beispielsweise ein pH-Indikator, befinden. In einer bevorzugten Ausführung der sensitiven Schicht 14 ist die Polymermatrix auf der Basis von Polydimethylsiloxan ausgeführt; es eignen sich aber auch andere Silicone oder Polymere wie PVC oder Ethylcellulose.

Bei Verwendung von Polydimethylsiloxan als Basispolymer der Polymermatrix zeigt die sensitive Schicht 14 ein sehr gutes Ansprechverhalten auf Kohlendioxid, da die Diffusionsgeschwindigkeit von CO₂ aufgrund der guten Gasdurchlässigkeit des Polymers sehr hoch ist. Der sonst übliche Zusatz von Weichmachern kann hier entfallen.

Die Schichtdicke der sensitiven Schicht 14 sollte 20 µm nicht übersteigen, da sonst eine ausreichende Diffusion der zu bestimmenden Gase in die sensitive Schicht 14 nicht mehr gewährleistet ist. Weiterhin ist die sensitive Schicht 14 vorzugsweise porös ausgeführt, um den Zutritt des Gasgemischs in möglichst alle Bereiche der Schicht zu gewährleisten. Besonders bevorzugt ist eine offenporige Ausführung der sensitiven Schicht 14, d.h., die in den Poren eingeschlossenen Gasräume stehen so miteinander in Kontakt, dass ein nahezu ungehinderter Zutritt der Gasatmosphäre zur sensitiven Schicht 14 gewährleistet ist.

Die Funktion der sensitiven Schicht 14 beruht darauf, dass diese neben einem pH-Indikator, wie beispielsweise Brilliantgelb, zusätzlich eine pH-aktive Substanz beinhaltet. Bei Ausführung des Sensors 10 zur Bestimmung von sauren Gasen, die bei Lösung in einem wässrigen Milieu eine Verringerung des pH-Wertes der Lösung bewirken, enthält die sensitive Schicht 14 des Sensors eine Base als pH-aktive Substanz. Bei Verwendung des Sensors 10 zur Detektion von basisch wirkenden Gasen, die bei Lösung in einem wässrigen Milieu zu einer Erhöhung des pH-Wertes der Lösung führen, ist in der sensitiven Schicht 14 eine Säure als pH-aktive Substanz vorgesehen.

Im erstgenannten Fall bewirkt die in der sensitiven Schicht 14 enthaltene Base ein basisches Milieu in Schicht und überführt den pH-Indikator in seine deprotonierte Form, die eine erste Färbung aufweist. Sobald ein saures Gas wie beispielsweise Kohlendioxid in Kontakt mit der sensitiven Schicht 14 kommt, reagiert es mit in der Schicht enthaltenem Wasser und bildet Hydrogencarbonat HCO₃⁻ sowie Hydroniumionen H₃O⁺. Diese Reaktion verändert den pH-Wert der Schicht und führt zu einer Reprotonierung des pH-Indikators, wobei der pH-Indikator und somit auch die sensitive Schicht 14 ihre Farbe verändert. Der Farbumschlag wird über eine Absorptions- oder Transmissionsmessung bei Wahl entsprechender Wellenlängenbereiche der Strahlung 13 detektiert.

Als pH-aktive Substanz wird der sensitiven Schicht 14 ein Polymer zugesetzt, dessen Hauptkette mindestens eine Seitenkette aufweist, wobei mindestens eine der Seitenketten mindestens eine pH-aktive funktionelle Gruppe enthält. Als pHaktiv wird dabei eine funktionelle Gruppe verstanden, die eine protolytische Reaktion mit Wasser eingeht. Unter dem Begriff eines Polymers im Sinne dieser Anmeldung sind stets auch Oligomere zu verstehen.

Die Hauptkette des Polymers ist prinzipiell frei wählbar. So eignen sich Polyethylene, Polydiallyle, Polyacrylate oder -methacrylate, Polyisocyanate, Polyamide oder Polysiloxane. Durch geeignete Wahl der Hauptkette lässt sich die Mischbarkeit des pH-aktiven Polymers mit dem Basispolymer der sensitiven Schicht 14 einstellen, sowie deren Porosität.

Sind basische funktionelle Gruppen in einer Seitenkette des pH-aktiven Polymers vorhanden, so können diese beispielsweise die nachfolgenden Grundstrukturen (I), (II), (III) aufweisen. Dabei stellt Grundstruktur (I) ein Polymer mit Seitenketten dar, die eine quarternäre Ammoniumfunktion aufweisen, Grundstruktur (II) ein Polymer mit Seitenketten, die jeweils zwei vicinale Kohlenstoffatome der Polymerhauptkette verbrücken und eine quarternäre Ammoniumfunktion enthalten, und Grundstruktur (III) stellt ein Polymer mit Seitenketten dar, die jeweils mehrere quarternäre Ammoniumfunktionen aufweisen.

Dabei bezeichnen die Reste Rₓ Molekülfragmente, vorzugsweise auf Kohlenwasserstoffbasis, wobei die Reste Rₓ gegebenenfalls funktionelle Gruppen oder Heteroatome aufweisen können. Die unterschiedlich bezifferten Reste Rₓ können verschiedene oder auch gleiche Molekülfragmente beschreiben. Die Reste R₁, in Grundstruktur (II) zusätzlich R₂, und R₁₀ können darüber hinaus eine Kohlenstoff-Stickstoffbindung darstellen.

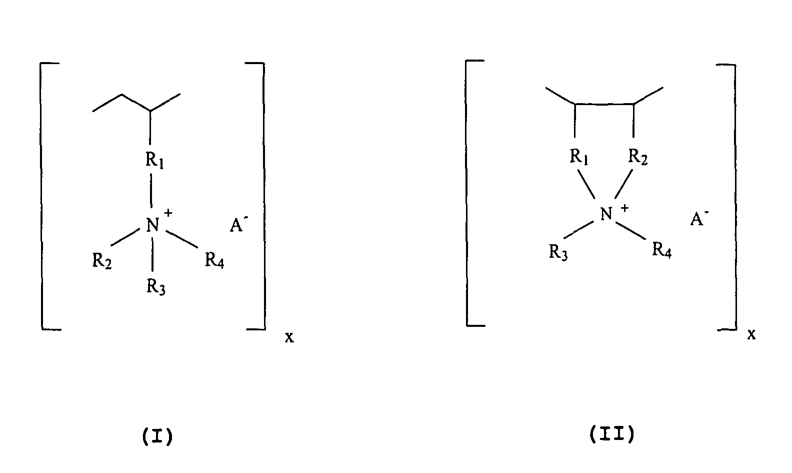

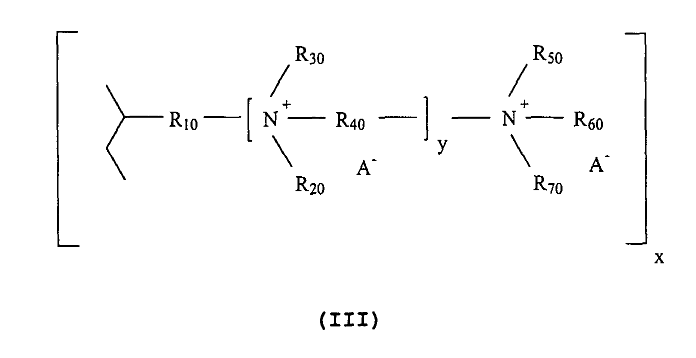

Die in den angegebenen Grundstrukturen angegebenen Anionen A⁻ können ein- oder mehrwertig sein und haben vorzugsweise basischen Charakter. So sind beispielsweise Hydroxid-, Phosphat- oder Carbonationen geeignet.

Anstelle der in den Grundstrukturen (I) bis (III) enthaltenen quarternären Ammoniumfunktionen können alternativ auch qaurternäre Phosphoniumfunktionen vorgesehen sein.

Als Beispiele für Verbindungen, die einer der oben genannten Grundstrukturen (I) bis (III) entsprechen, werden als besonders geeignet genannt:

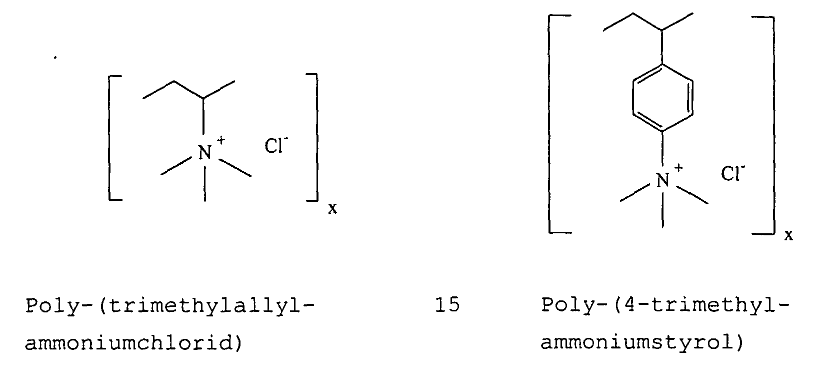

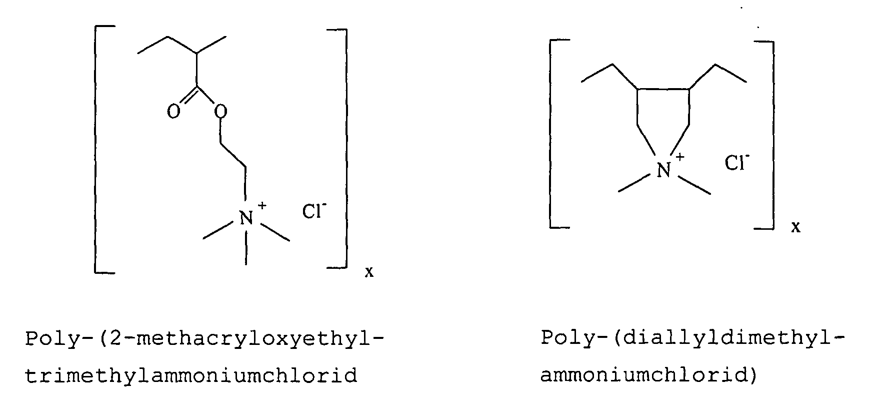

Sensoren, die vorzugsweise der Bestimmung basisch reagierender Gase wie Ammoniak, Phosphine oder niederer Alkylamine dienen, enthalten vorzugsweise in der sensitiven Schicht 14 ein Polymer, in dessen Seitenketten lediglich sauer reagierende funktionelle Gruppen vorhanden sind oder sowohl sauer reagierende als auch basisch reagierende. Die Kombination von sauer reagierenden und basisch reagierenden funktionellen Gruppen in den Seitenketten des Polymers erhöht die Reversibilität der Reaktion des Seitenkettenpolymers mit dem zu bestimmenden Gas.

Als sauer reagierende funktionelle Gruppen weisen die Seitenketten des Polymers insbesondere Sulfon-, Phosphon- oder Carbonsäuregruppen auf. Dabei sind folgende Grundstrukturen (IV), (V), (VI) denkbar:

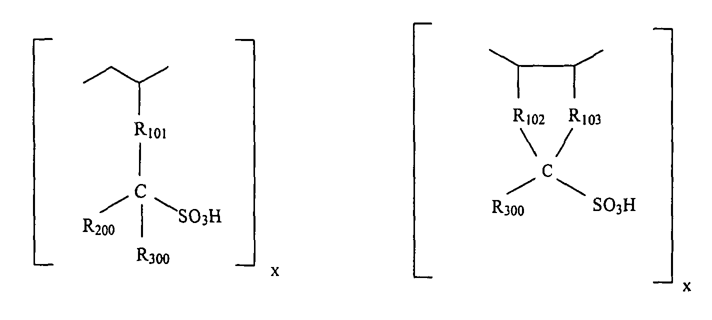

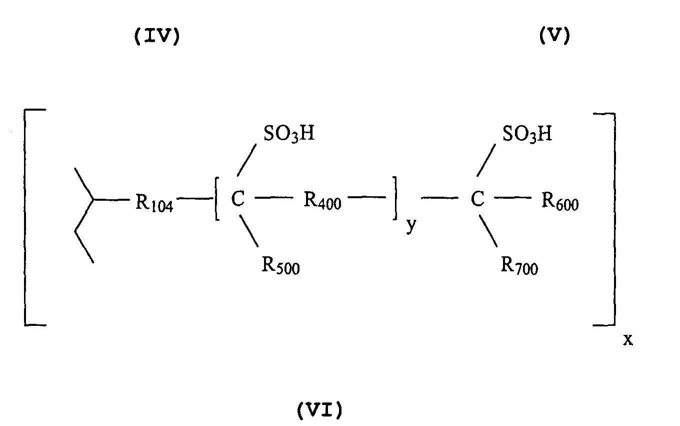

Dabei können die Reste Rₓ Wasserstoff sein oder bezeichnen Molekülfragmente vergleichbar denen, wie sie in den Grundstrukturen (I) bis (III) vorgesehen sind. Die Reste R₁₀₁ bis R₁₀₄ können darüber hinaus Kohlenstoff-Kohlenstoff- oder Heteroatom-Kohlenstoffbindungen darstellen. Die Reste R₃₀₀, R₅₀₀, R₇₀₀ können zusätzlich eine C-C-Doppelbindung zu einem der anderen Reste Rₓ der Seitenkette symbolisieren.

Anstelle der in Grundstrukturen (IV) bis (VI) enthaltenen Sulfonsäuregruppen können alternativ auch Phosphon- oder Carbonsäurefunktionen vorgesehen sein.

Besonders geeignete Verbindungen sind:

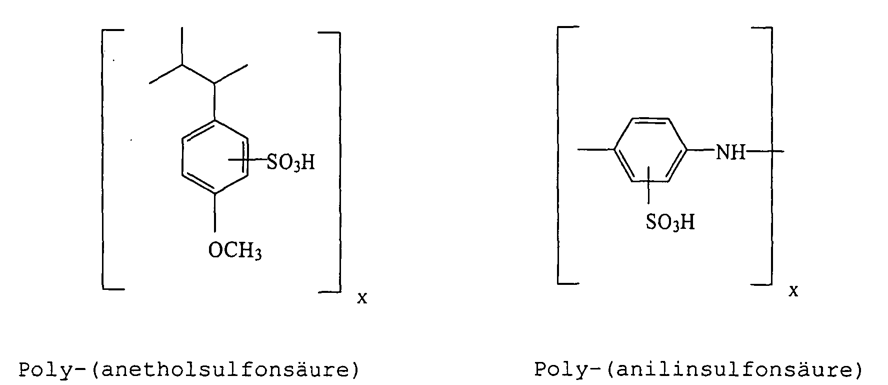

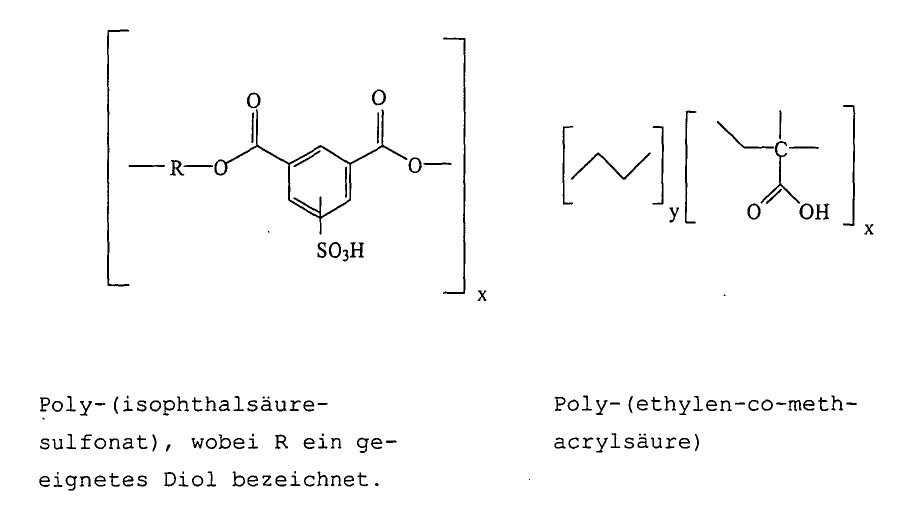

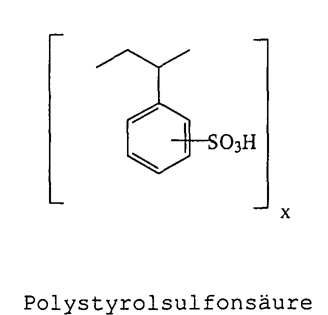

Die Seitenketten der in den Grundstrukturen (I) bis (VI) angegebenen pH-aktiven Polymere können innerhalb eines Polymers identisch oder auch verschieden aufgebaut sein. So können innerhalb des Polymers alternierende oder unregelmäßige Abfolgen von Seitenketten unterschiedlicher Struktur bzw. Anzahl an pH-aktiven funktionellen Gruppen vorgesehen sein.

Gemäß einer zweiten, in Figur 2 dargestellten Ausführungsform des Sensors wird die sensitive Schicht 14 nicht auf einem Substrat, sondern direkt auf dem Detektor 24 aufgebracht. Dies vereinfacht den Aufbau des optischen Sensors.

Die Erfindung ist nicht auf die beschriebenen Ausführungsbeispiele beschränkt, sondern es sind je nach Verwendungszweck neben den in den Figuren dargestellten und beschriebenen optischen Sensoren weitere Ausführungsformen denkbar. So ist eine Bestimmung verschiedenster sauerer oder auch basisch reagierender Gase denkbar wie beispielsweise CO₂ ,NOₓ, SO₂, SO₃ , NH₃ oder Halogenwasserstoffverbindungen. Darüber hinaus ist bei einer entsprechenden Ausgestaltung der sensitiven Schicht 14 auch eine Bestimmung von CO oder HCN möglich.

## Patentansprüche

1. Optischer Gassensor zur Bestimmung eines Gases, insbesondere zur Bestimmung eines Gasbestandteils der Luft, mit einer Strahlungsquelle, einem Detektor und mit einer sich im Strahlengang der Strahlungsquelle befindenden sensitiven Schicht, **dadurch gekennzeichnet, dass** die sensitive Schicht (22) mindestens ein Oligomer oder Polymer mit mindestens einer Seitenkette enthält, wobei die Seitenkette mindestens eine basisch oder sauer wirkende funktionelle Gruppe aufweist.

2. Optischer Gassensor nach Anspruch 1, **dadurch gekennzeichnet, dass** die Seitenkette als basisch wirkende funktionelle Gruppe mindestens eine quarternäre Ammonium- und/oder Phosphoniumfunktion aufweist.

3. Optischer Gassensor nach Anspruch 1, **dadurch gekennzeichnet, dass** die Seitenkette als sauer wirkende funktionelle Gruppe mindestens eine Carbonsäure-, Phosphonsäureund/oder Sulfonsäurefunktion aufweist.

4. Optischer Gassensor nach Anspruch 1 oder 2, **dadurch gekennzeichnet, dass** die Seitenkette die allgemeine Formel [-R₁-NR₂R₃R₄]⁺ A⁻ hat, wobei -R₁- ein Brückenmolekülfragment oder eine Kohlenstoff-Stickstoffbindung ist, durch die die Seitenkette mit der Hauptkette des Oligomers oder Polymers verbunden ist, wobei R₂, R₃ und R₄ weitere, gegebenenfalls funktionalisierte oder funktionalisierbare Reste bezeichnen, und A⁻ ein geeignetes Anion ist.

5. Optischer Gassensor nach Anspruch 1 oder 2, **dadurch gekennzeichnet, dass** die Seitenkette die allgemeine Formel [(-R₁-)(-R₂-)NR₃R₄]⁺ A⁻ hat, wobei -R₁- und -R₂- Brückenmolekülfragmente oder Kohlenstoff-Stickstoffbindungen sind, durch die die Seitenkette mit der Hauptkette des Oligomers oder Polymers verbunden ist, wobei R₃ und R₄ weitere, gegebenenfalls funktionalisierte oder funktionalisierbare Reste bezeichnen, und A ein geeignetes Anion ist.

6. Optischer Gassensor nach Anspruch 4, **dadurch gekennzeichnet, dass** das Brückenmolekülfragment R₁ die allgemeine Formel [-R₁₀-[NR₂₀R₃₀-R₄₀-]ₓ-]^{(x)+} (x)/n Aⁿ⁻ hat, wobei -R₁₀ein Brückenmolekülfragment oder eine Kohlenstoff-Stickstoffbindung ist, durch die die Seitenkette mit der Hauptkette des Oligomers oder Polymers verbunden ist, wobei R₂₀, R₃₀, R₄₀ gegebenenfalls funktionalisierte oder funktionalisierbare Reste bezeichnen, wobei -R₄₀- verbrückend ist, und wobei Aⁿ⁻ ein geeignetes Anion und x eine ganze Zahl größer 0 bezeichnet.

7. Optischer Gassensor nach Anspruch 1 oder 3, **dadurch gekennzeichnet, dass** die Seitenkette die allgemeine Formel -R₁₀₄-[-CR₄₀₀SO₃H-R₅₀₀-]ₓ[-CR₆₀₀ R₇₀₀SO₃H] hat, wobei -R₁₀₄- ein Brückenmolekülfragment oder eine Kohlenstoff-Kohlenstoffbindung ist, durch die die Seitenkette mit der Hauptkette des Oligomers oder Polymers verbunden ist, wobei R₄₀₀, R₅₀₀, R₆₀₀ und R₇₀₀ weitere, gegebenenfalls funktionalisierte oder funktionalisierbare Reste oder eine C-C-Doppelbindung zu einem der anderen Reste Rₓ bezeichnen, wobei R₄₀₀ verbrückend ist, und wobei A⁻ ein geeignetes Anion und x eine ganze Zahl ≥ 0 ist.

8. Optischer Gassensor nach einem der vorhergehenden Ansprüche, **dadurch gekennzeichnet, dass** die Seitenkette mindestens eine sauer wirkende und mindestens eine basisch wirkende funktionelle Gruppe aufweist.

9. Optischer Gassensor nach einem der vorhergehenden Ansprüche, **dadurch gekennzeichnet, dass** die sensitive Schicht (14) Polydimethylsiloxan enthält.

10. Optischer Gassensor nach einem der vorhergehenden Ansprüche, **dadurch gekennzeichnet, dass** die sensitive Schicht (14) eine Schichtdicke von 20 bis 100 µm aufweist.

11. Optischer Gassensor nach einem der vorhergehenden Ansprüche, **dadurch gekennzeichnet, daß** sich die sensitive Schicht (14) auf einem Substrat befindet, das ein Detektor (24) ist.

12. Verwendung eines Sensors nach einem der Ansprüche 1 bis 11 als sensitives Element zur Bestimmung von CO₂ , NOₓ, SO₂, SO₃ , NH₃, CO, HCN und/oder Halogenwasserstoffverbindungen.
